(19) Europäisches Patentamt
European Patent Office
Office européen des brevets

(11) **EP 4 718 343 A1**

(12) **EUROPEAN PATENT APPLICATION**

(43) Date of publication:
**01.04.2026 Bulletin 2026/14**

(21) Application number: **24306592.7**

(22) Date of filing: **30.09.2024**

(51) International Patent Classification (IPC):
***G06N 10/70*** (2022.01)     ***G06N 10/40*** (2022.01)

(52) Cooperative Patent Classification (CPC):
**G06N 10/40; G06N 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Pasqal**
**91300 Massy (FR)**

(72) Inventors:
- **LASSABLIERE, Lucas**
  **91300 MASSY (FR)**
- **TOUATI, Selim**
  **91300 MASSY (FR)**
- **de HOND, Julius**
  **91300 MASSY (FR)**

(74) Representative: **Lavoix**
**2, place d'Estienne d'Orves**
**75441 Paris Cedex 09 (FR)**

(54) **A METHOD FOR OPTIMIZING THE FUNCTIONING OF A QUANTUM COMPUTER**

(57) The invention relates to a method for optimizing the functioning of a quantum computer (12), the method comprising:
- performing measurements on a particle loaded in the array of trapping sites, while applying, on the loaded particle, an excitation signal at a splitting energy separating the particle levels,
- processing the measurements so as to obtain experimental parameters,
- simulating expected parameters for particles loaded in the array of trapping sites when sending the same simulated excitation signal on such particles, the simulations comprising in varying noise parameters until the expected parameters match the experimental parameters, and
- correcting features of the quantum computer (12) as a function of the noise parameters obtained at the end of the simulations.

10

FIG.1

EP 4 718 343 A1

**Description**

TECHNICAL FIELD OF THE INVENTION

The present invention concerns a method for optimizing the functioning of a quantum computer through the characterization of noise-sources of a quantum computer. The present invention also concerns an associated computing system.

BACKGROUND OF THE INVENTION

Increasing the fidelities of operations on a quantum processing unit (QPU) is a crucial step in optimizing its overall performance on the path towards solving useful problems.

Particles, especially neutral atoms, used in quantum devices, are sensitive to noise. Because of this, QPU might perform erroneous calculations and provide unreliable results.

Hence, to obtain relevant result from a QPU, it has to be calibrated, not only on the mechanic point of view but also on the atom side, that is to say to build a reliable register.

To obtain a reliable register at the end, it is necessary to consider some parameters fluctuations that create noise to which the register is sensitive, such as intensity noise, magnetic field fluctuations, trap depth fluctuations, sidebands and polarization imperfections. However, the many variables involved make such optimizations time-consuming, if not daunting.

Nevertheless, calibration measurements cost significant time and are not precise enough, which renders the calibration complex to implement and does not solve completely the problem.

SUMMARY OF THE INVENTION

Hence, there exists a need for a way enabling to evaluate source of errors of a quantum device, so as to optimize the functioning of the quantum device.

To this end, the invention relates to a method for optimizing the functioning of a quantum computer through the characterization of noise-sources of the quantum computer, the quantum computer having an array of trapping sites for trapping particles so as to form a quantum register, the method being implemented by a computing system comprising the quantum computer and a classical computer, and comprising the following steps:

- performing measurements on at least one particle loaded in the array of trapping sites, while applying, on the loaded particle(s), an excitation signal at a splitting energy separating the particle levels,
- processing the measurements so as to obtain experimental parameters characterizing a Rabi oscillation for particles loaded in the array of trapping sites,
- simulating expected parameters characterizing a Rabi oscillation for particles loaded in the array of trapping sites when sending the same simulated excitation signal on such particles, the simulations comprising in varying noise parameters until the expected parameters match the experimental parameters, and
- correcting features of the quantum computer as a function of the noise parameters obtained at the end of the simulations, the corrections enabling optimizing the functioning of the quantum computer.

The method according to the invention may comprise one or more of the following features considered alone or in any combination that is technically possible:

- during the step of performing measurements, the excitation signal has a predetermined duration enabling to perform a Rabi oscillation, the predetermined duration being divided into timesteps, the measurements being taken several times for each timestep of the predetermined duration;
- when the particles are neutral atoms, the measurements being carried out by exciting the corresponding particles and measuring the intensity of the fluorescent light emitted by said particles which de-excite;
- the experimental parameters are chosen among the following parameters: a damping rate defined as the inverse of the lifetime of a Rabi oscillation, an amplitude of a Rabi oscillation and a frequency of a Rabi oscillation;
- the noise parameters are chosen among the following parameters: an intensity noise spectrum of the source emitting the excitation signal, a phase noise spectrum of the source emitting the excitation signal, a magnetic field fluctuation, a trap depth noise, a sideband effect and a polarization imperfection;
- during the simulation step, the experimental parameter considered for the simulation is the damping rate, in order to extract the intensity noise spectrum of the source emitting the excitation signal and/or the phase noise spectrum of the source emitting the excitation signal and/or the magnetic field fluctuation and/or the trap depth noise;

- during the simulation step, the experimental parameter considered for the simulation is the amplitude and frequency of a Rabi oscillation in order to extract the sideband effect and/or the polarization imperfection;
- the simulation step is based on an equation and a Monte-Carlo approach, the equation being for example a Master equation or a Schrödinger equation;
- during the step of performing measurements, the particles have been stochastically loaded in the trapping sites of the calibration array and have not been rearranged;
- the particles are two-level systems able to undergo a Rabi oscillation, the particles being preferably neutral atoms.

The invention also relates to a computing system comprising a quantum computer and a classical computer, the computing system being configured for carrying out steps of a method as previously described.

BRIEF DESCRIPTION OF THE DRAWINGS

The invention will be easier to understand in view of the following description, provided solely as an example and with reference to the appended drawings in which:

- Figure 1 is a schematic view of an example of a computing system, and
- Figure 2 is a schematic view of an example of an organigram of a method for optimizing the functioning of a quantum computer, and
- Figure 3 is a schematic view of an example of a simulation model.

DETAILED DESCRIPTION OF SOME EMBODIMENTS

In the description, the terms "able to", "suitable for", and "configured for" are considered equivalent. The terms "trapping sites" and "traps" are also considered equivalent.

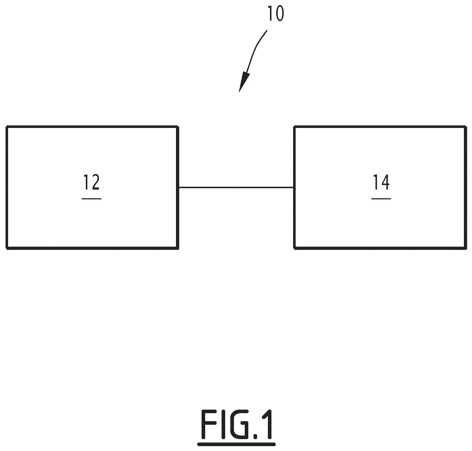

A computing system 10 is illustrated on figure 1. The computing system 10 is configured to implement a method for optimizing the functioning of a quantum computer 12.

The computing system 10 comprises the quantum computer 12 (quantum processing unit or QPU) and a classical computer 14.

In an example, the quantum computer 12 comprises a source of particles, a generator of trapping sites for particles, a detecting device and hardware elements.

In the case of neutral atoms, the source of particles comprises a vacuum chamber in which the particles (for example atoms) are located. In particular, during use, a vacuum is created in the vacuum chamber and a dilute atomic vapor is formed in the vacuum chamber. Other embodiments are nonetheless possible.

The generator of trapping sites is able to generate a laser beam which when focused generates an array of trapping sites for particles (e.g., optical tweezers). For example, the array of trapping sites can be 1-dimensional, 2-dimensional or 3-dimensional.

In an example of implementation, the generator of trapping sites comprises a laser source, or equivalent, able to generate a laser beam and a beam shaper able to shape the laser beam (e.g., to impart a specific intensity pattern to the laser beam) so as to obtain an array of trapping sites for particles when the laser beam is focused.

The beam shaper is, for example, a spatial light modulator (SLM), such as an optical phase modulator, preferably a liquid crystal optical modulator (LCOS-SLM), or a digital micromirror device (DMD). In another example, the beam shaper comprises one or more acousto-optical deflector, or a device with metasurfaces.

The detecting device is configured to detect the presence of particle(s) in the qubit register. The detecting device is, for example, a camera such as a charge-coupled device (CCD) camera, or any suitable imaging technology. For example, in the case of atoms, the camera is suitable to detect the fluorescence emitted from the atoms.

The hardware elements enable to manipulate the particles trapped in the trapping sites and forming the qubits, so as to perform quantum operations on the qubits. In other words, the particles trapped in the trapping sites collectively form a quantum register.

Examples of quantum processors based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, Septembre 2020. ISSN 2521-327X. doi: 10.22331/q-2020-09-21-327.

Typically, the quantum computer 12 uses the quantum properties of matter, such as superposition and entanglement, to perform operations on the qubits. In particular, a qubit refers to a two-level quantum system.

In a non-limiting example, a qubit may comprise two basic quantum states I0> and I1 > representing the possible quantum states of the qubit. According to the superposition principle of quantum mechanics, any superposition of the form aI0> + bI1> (a and b being complex numbers and aa*+bb*=1) is a possible quantum state of the qubit. The population in the I0> state is noted $P_0$ = IaI$^2$ and in the I1> state is noted $P_1$ = IbI$^2$.

Typically, the particles meant to be trapped in the trapping sites are two-level systems able to undergo a Rabi oscillation. A Rabi oscillation is a quantum physics phenomenon describing the quantum dynamics of a two-level system in the presence of an oscillatory driving field. According to the superposition principle previously described, the populations $P_0(t) = |a(t)|^2$ and $P_1(t) = |b(t)|^2$ oscillate as a function of the Rabi frequency, the detuning and a damping rate. Rabi oscillations are thus associated with a Rabi frequency, which is the frequency of particles oscillating between the two states of the two-level system. The Rabi frequency is proportional to the amplitude of the applied electromagnetic field.

Preferably, the particles are atoms, and in particular electrically neutral atoms, that interact with a monotonically decaying interaction. Neutral atoms are, for example, alkali atoms (such as Rubidium or Cesium atoms) or alkaline-earth atoms (such as Strontium or Ytterbium atoms). In a variant, the particles are molecules, which can be polar molecules, or highly magnetic atoms that have significant magnetic dipoles.

The particles have a fundamental state (no excitation) and at least one excited state. The excited state is, for example, a Rydberg state.

The classical computer 14 comprises typically a processor comprising a data processing unit, memories and a reader for information media. Eventually, the classical computer 14 comprises a human machine interface, such as a keyboard, and a display.

In an example of implementation, the classical computer 14 interacts with a computer program product. The computer program product comprises an information medium. The information medium is a medium readable by the classical computer 14, usually by the data processing unit. The readable information medium is a medium suitable for storing electronic instructions and capable of being coupled to a computer system bus. On the information medium is stored the computer program comprising program instructions. The computer program is loadable on the data processing unit and is adapted to entail the implementation of at least the processing step, the simulation step, and the correction step of a method that will be described later in the description, when the computer program is loaded on the processing unit of the classical computer 14.

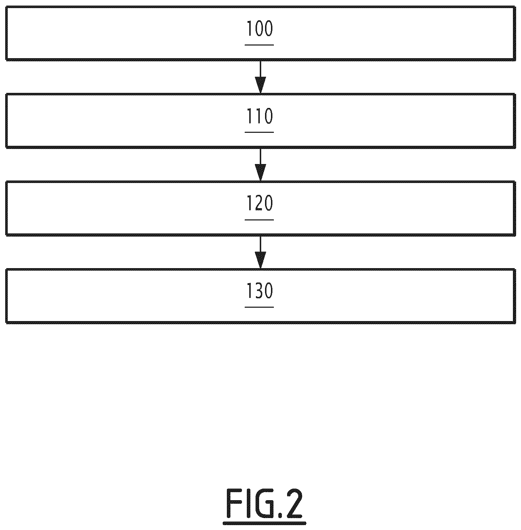

A method for optimizing the functioning of the quantum computer 12, will now be described with reference to the organigram of figure 2.

The optimization method is implemented by the computing system 10.

The optimization method comprises a step 100 of performing measurements on at least one particle loaded in an array of trapping sites of the quantum computer 12, while applying an excitation signal on the loaded particle(s) at a splitting energy separating the particle levels.

For example, the excitation signal is an exciting electromagnetic field at an energy corresponding to the level separation of the particles (atoms for example). This results in a flip-flopping of the population which we call a Rabi oscillation (and the frequency at which this happens is the Rabi frequency). The excitation signal is thus suitable to perform a Rabi oscillation on the trapped particles.

In another example, the excitation signal is a sequence of laser pulses, such as a Rabi or Ramsey sequence.

The array of trapping sites is for example a predetermined array of trapping sites generated in the quantum computer 12.

The step 100 of performing measurements is implemented by the quantum computer 12.

Preferably, during the step 100 of performing measurements, the particles have been stochastically loaded in the trapping sites and have not been rearranged. This enables to simplify the measurement step.

In an example of implementation, when the particles are neutral atoms, the measurements are carried out by exciting the corresponding particles and measuring the intensity of the fluorescent light emitted by said particles which de-excite.

The excitation signal is for example chosen so as to entail an hyperfine transition or a Rydberg transition.

In an example of implementation, during the step of performing measurements, the excitation signal has a predetermined duration enabling to perform a Rabi oscillation. The predetermined duration is divided into timesteps. The measurements are taken several times for each timestep of the predetermined duration.

For example, in the case of neutral atoms, the predetermined duration is discretized into anywhere between 5 and 200 timesteps. Because of the probabilistic nature of quantum physics, fluorescence measurements of an atom are repeated several times for a given timestep after the calculation (between 10 and 1000 times) to obtain the population (which is the average of the fluorescence measurements). Hence, if we use 10 timesteps for a Rabi oscillation, and if for each timestep we perform 100 measurements, we have to load 1000 times atoms in tweezers (10x100) and to perform in total 1000 measurements. In other words, we have to reload tweezers each time we do a measurement.

It should be noted that the Rabi oscillation is given as an example, and that other measurements can be carried out, such as Ramsey measurements.

As stated before, the measurements are performed on at least one loaded particle, but can be performed for a plurality of loaded particles, or the whole quantum register loaded with particles.

The optimization method comprises a step 110 of processing the measurements so as to obtain experimental parameters characterizing a Rabi oscillation for particles loaded in the array of trapping sites. The processing step 110 is implemented by the classical computer 14.

The experimental parameters are for example obtained using fitting functions.

In an example of implementation, the experimental parameters are chosen among the following parameters:

- a damping rate defined as the inverse of the lifetime of a Rabi oscillation, for example under the form of a heatmap (or average values over several trapping sites),
- an amplitude of a Rabi oscillation, and
- a frequency of a Rabi oscillation.

The damping rate, the amplitude and the frequency of the Rabi oscillation are for example extracted by fitting the measurements.

In particular, the fitting function is for example obtained on the basis of the following formula (from which $\Omega$ and $\gamma$ can be extracted):

$$\hat{P}_g(\Omega, \gamma, t) = \frac{\Omega^2}{2\Omega^2 + \gamma^2}[1 + e^{-\frac{3\gamma t}{4}}(\cos(\hat{\Omega}t) + \frac{3\gamma}{4\hat{\Omega}}\sin(\hat{\Omega}t)]$$

Where:

- $\hat{P}_g(\Omega, \gamma, t)$ is the probability to detect an atom in the ground state.

- $\hat{\Omega} = \sqrt{\Omega^2 - \frac{\gamma^2}{16}}$ is the effective Rabi frequency in the presence of damping.

- $\Omega$ is the Rabi frequency without damping.

- $\gamma$ is the damping rate.

In the case of neutral atoms, the damping rate can be obtained from the decrease in contrast of the oscillation over time, by fitting the aforementioned functions.

Extensions of this model are possible, too. To give an example: in the limit of strong shot-to-shot fluctuations of the Rabi frequency the coherence envelope is multiplied by a prefactor $e^{-\sigma^2 t2/2}$, where $\sigma$ is proportional to the shot-to-shot fluctuation strength.

The optimization method comprises a step 120 of simulating expected parameters characterizing a Rabi oscillation for particles loaded in the array of trapping sites when sending the same excitation simulated signal on such particles. The excitation simulated signal is thus the same pulse sequence than the one used when performing the measurements.

The simulation step 130 is implemented by the classical computer 14.

The simulations consist in varying noise parameters until the expected parameters match the experimental parameters.

The noise parameters are parameters whose fluctuations can influence the results of calculations performed by the quantum device 12.

At least one noise parameter is varied during the simulation until the result of the simulation fits to the experimental parameters.

Preferably, the noise parameters are chosen among the following parameters:

- (i) an intensity noise spectrum of the source emitting the excitation signal (in particular, noise of the optical intensity of a laser beam),
- (ii) a magnetic field fluctuation,
- (iii) a trap depth noise, which is the noise in the trapping sites of the quantum computer 12. This noise results in a fluctuation of the energy gap separating the atomic levels that are being driven.
- (iv) a sideband effect, which is a fluctuation of the laser frequency around a central frequency. In particular, the sideband effect comprises two different noise sources:

    ◦ In some experiments we use sidebands to drive transitions, but these can have unintended effects due to them being near-resonant with other transitions.

○ Lasers have a finite line width, which is a fluctuation of the laser frequency around a central frequency. (This is always present, regardless of whether we apply sidebands or not), and

- (v) a polarization imperfection.
- (vi) a phase noise spectrum of the source emitting the excitation signal.

The parameters (ii) and (iii) are related to decoherence sources of noise for the quantum device 12. The parameters (i), (iv), (v), and (vi) are related to sources of noise linked to the light source (laser) exciting the quantum register.

In an example of implementation, the experimental parameter considered for the simulation is the damping rate in order to extract the intensity noise spectrum of the source emitting the excitation signal and/or the magnetic field fluctuation and/or the trap depth noise and/or the phase noise spectrum of the source emitting the excitation signal. In other words, in order to extract one or more of the parameters (i), and/or (ii), and/or (iii), and/or (vi), define above, or any combination thereof, we varied these parameters until reaching the measured damping rate. When the result of the simulation is equal to the measured damping rate, then the contribution of the noisy parameters (i), (ii), (iii), (vi) can be determined.

In an example of implementation, the experimental parameter considered for the simulation is the amplitude and frequency of a Rabi oscillation in order to extract the sideband effect and/or the polarization imperfection. In other words, in order to extract the parameter (iv) or (v), we varied these parameters until reaching the measured amplitude and frequency of a Rabi oscillation. When the result of the simulation is equal to the measured amplitude and frequency of a Rabi oscillation, then the contribution of the noisy parameters (iv), (v) can be determined.

In an example, the simulation step is based on an equation and a Monte-Carlo approach. The equation is for example a Master equation or a Schrödinger equation. In particular, a Master equation is an equation used to describe the time evolution of a system that can be modeled as being in a probabilistic combination of states at any given time.

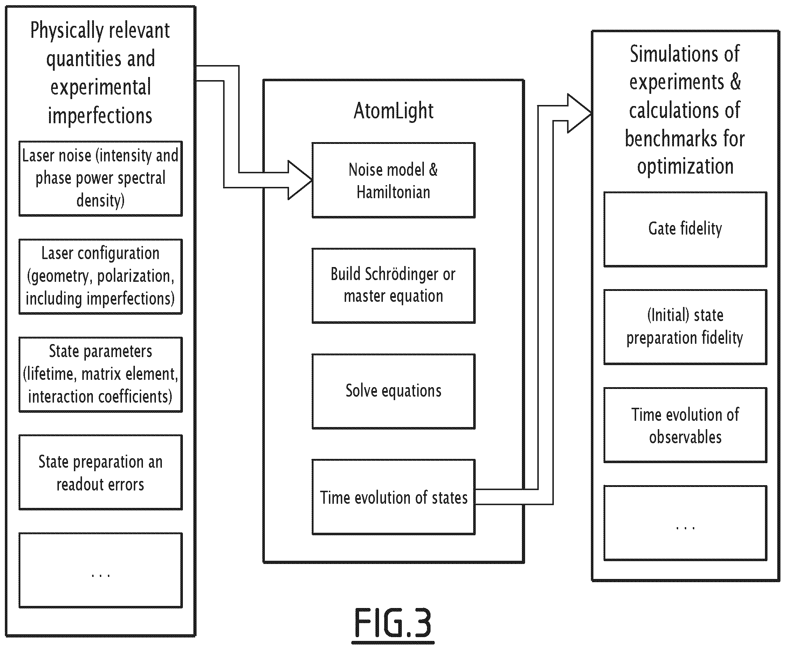

An example of a simulation model enabling to perform the simulation is described on figure 3. This model is a software toolbox that simulates a quantum processor on an atomic physics level. In order to do so, it takes physically relevant quantities and experimental imperfections as inputs. These comprise for example (but are not limited to):

- Laser noise, both in the intensity and phase, possibly in the form of a power spectral density function that describes how much noise is present at each frequency.
- The laser configuration, in particular how the beams are physically arranged in the lab (which affects some decoherence mechanisms such as dephasing via the Doppler shift), but also the polarization, which determines which states get coupled, and how strongly they get coupled, and imperfections in the polarization. This can cause unwanted couplings that have to be added to the simulation in order to be accurate.
- Relevant state parameters of the atomic levels involved, for instance the lifetimes (which are important for calculating the decoherence), the matrix elements (which set the coupling strength), and the interaction coefficients.
- State preparation and readout errors, which are effective parameters that can be used to realistically simulate noise phenomena before and after the quantum dynamics that lie at the core of said simulation.

This model takes in all these parameters to build a simulation consisting of a (possibly time-dependent) Hamiltonian, and (if necessary - optional) converts it to a master equation using the Lindbladian operator. General stochastic processes are sampled by averaging multiple simulations over randomly generated signals. Generally, this model solves the evolution of quantum state vectors or density matrices in time. This can be used to do simulations of experiments and to calculate relevant benchmarks which are used for optimization. This makes it a general and flexible tool, but it can for instance be used to extract:

- The gate fidelity, which is how reliably a particular operation is implemented in the QPU. Realistic experimental noise parameters cause deviations from the ideal case, and by simulating this it's possible to minimize these deviations through optimization.
- The state preparation fidelity; we require the atoms to be initialized in a particular state, but due to experimental limitations it isn't straightforward to do this with 100% fidelity. By accounting for the effects of imperfections this can be simulated and optimized.
- Usually, the time evolution of states and observables can be calculated. This is what users typically measure on the QPU during experiments. By having a reliable simulation of these experiments, it is (in some cases) possible to say beforehand whether or not an experiment will produce the expected result in the presence of noise.

The optimization method comprises a step 130 of correcting features of the quantum computer 12 as a function of the noise parameters obtained at the end of the simulations. The correction step is, for example, carried out by the quantum computer 12.

The corrections enable optimizing the functioning of the quantum computer 12.

For example, the corrections comprise a modification in the alignment or the intensity of a light source enabling to generate the trapping sites and/or to send an excitation signal on the quantum register.

For example, the corrections comprise a reduction of laser intensity or phase noise at a particular frequency by optimizing the experimental regulation parameters or hardware.

For example, the corrections comprise the use of additional regulators if it is found that the electric currents that generate magnetic fields is too noisy.

For example, the corrections comprise the adoption of dynamical decoupling sequences tailored to specific noise to increase the fidelity of quantum operations.

Computing operations can then be performed on the quantum computer 12.

Alternatively, or in complement, the corrections might also be post-processing corrections performed on the results of computing operations.

Hence, from the simulation it is possible to extract the contribution of each noise and understanding the effects of each noise source on the quantum device.

In particular, the sideband allows to understand why the Rabi oscillation decreases during time. For example, if after several simulation the sideband effect increase maybe it is necessary to change the light source. In fact, the sideband are generated by the light source and could increase the sideband effect with the "age" of the light source or too much dust on the light source

The polarization imperfections allow to understand error on the calculation and how to correct the problem, such as changing the polarizing plate.

The intensity noise spectrum allows to understand the defaults of lasers and maybe replace it by another. The other environmental (decoherence source) can be modified to have less effect on the system's decoherence.

Another possible advantage is that (if we cannot improve something on the hardware) we can design our pulses such that they are minimally sensitive to this particular noise type.

Therefore, the above described method enables to evaluate source of errors of a quantum device, which are then used to correct and thus optimize the functioning of the quantum device.

The person skilled in the art will understand that the embodiments and variants described above in the description can all be combined provided that they are technically compatible.

## Claims

1. A method for optimizing the functioning of a quantum computer (12) through the characterization of noise-sources of the quantum computer (12), the quantum computer (12) having an array of trapping sites for trapping particles so as to form a quantum register, the method being implemented by a computing system (10) comprising the quantum computer (12) and a classical computer (14), and comprising the following steps:

   - performing measurements on at least one particle loaded in the array of trapping sites, while applying, on the loaded particle(s), an excitation signal at a splitting energy separating the particle levels,
   - processing the measurements so as to obtain experimental parameters characterizing a Rabi oscillation for particles loaded in the array of trapping sites,
   - simulating expected parameters characterizing a Rabi oscillation for particles loaded in the array of trapping sites when sending the same simulated excitation signal on such particles, the simulations comprising in varying noise parameters until the expected parameters match the experimental parameters, and
   - correcting features of the quantum computer (12) as a function of the noise parameters obtained at the end of the simulations, the corrections enabling optimizing the functioning of the quantum computer (12).

2. A method according to claim 1, wherein during the step of performing measurements, the excitation signal has a predetermined duration enabling to perform a Rabi oscillation, the predetermined duration being divided into timesteps, the measurements being taken several times for each timestep of the predetermined duration.

3. A method according to claim 1 or 2, wherein when the particles are neutral atoms, the measurements being carried out by exciting the corresponding particles and measuring the intensity of the fluorescent light emitted by said particles which de-excite.

4. A method according to any one of claims 1 to 3, wherein the experimental parameters are chosen among the following parameters: a damping rate defined as the inverse of the lifetime of a Rabi oscillation, an amplitude of a Rabi oscillation and a frequency of a Rabi oscillation.

5. A method according to any one of claims 1 to 4, wherein the noise parameters are chosen among the following parameters: an intensity noise spectrum of the source emitting the excitation signal, a phase noise spectrum of the source emitting the excitation signal, a magnetic field fluctuation, a trap depth noise, a sideband effect and a polarization imperfection.

6. A method according to claims 4 and 5, wherein during the simulation step, the experimental parameter considered for the simulation is the damping rate, in order to extract the intensity noise spectrum of the source emitting the excitation signal and/or the phase noise spectrum of the source emitting the excitation signal and/or the magnetic field fluctuation and/or the trap depth noise.

7. A method according to claims 4 and 5, or claim 6 dependent on claims 4 and 5, wherein during the simulation step, the experimental parameter considered for the simulation is the amplitude and frequency of a Rabi oscillation in order to extract the sideband effect and/or the polarization imperfection.

8. A method according to any one of claims 1 to 7, wherein the simulation step is based on an equation and a Monte-Carlo approach, the equation being for example a Master equation or a Schrödinger equation.

9. A method according to any one of claims 1 to 8, wherein during the step of performing measurements, the particles have been stochastically loaded in the trapping sites of the calibration array and have not been rearranged.

10. A method according to any one of claims 1 to 9, wherein the particles are two-level systems able to undergo a Rabi oscillation, the particles being preferably neutral atoms.

11. A computing system (10) comprising a quantum computer (12) and a classical computer (14), the computing system (10) being configured for carrying out steps of a method according to any one of claims 1 to 10.

**FIG.1**

FIG.2

**Physically relevant quantities and experimental imperfections**

Laser noise (intensity and phase power spectral density)

Laser configuration (geometry, polarization, including imperfections)

State parameters (lifetime, matrix element, interaction coefficients)

State preparation an readout errors

. . .

**AtomLight**

Noise model & Hamiltonian

Build Schrödinger or master equation

Solve equations

Time evolution of states

**Simulations of experiments & calculations of benchmarks for optimization**

Gate fidelity

(Initial) state preparation fidelity

Time evolution of observables

. . .

## FIG.3

EP 4 718 343 A1

Europäisches
Patentamt

European
Patent Office

Office européen
des brevets

## EUROPEAN SEARCH REPORT

**Application Number**

EP 24 30 6592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ETTORE CANONICI ET AL: "Machine-learning based noise characterization and correction on neutral atoms NISQ devices", ARXIV.ORG, CORNELL UNIVERSITY LIBRARY, 201 OLIN LIBRARY CORNELL UNIVERSITY ITHACA, NY 14853, 27 June 2023 (2023-06-27), XP091548574, * Title,  Abstract * * p1-3 * * TABLE I; figures 1,4 * | 1-11 | INV. G06N10/70 G06N10/40 |
| A | DE RAEDT HANS ET AL:  "\<mark>Quantum simulations and experiments on Rabi oscillations of spin qubits\</mark>: \<mark>Intrinsic vs extrinsic damping\</mark>", PHYSICAL REVIEW B, [Online] vol. 85, no. 1, 12 December 2011 (2011-12-12), pages 014408-014408, XP093259743, US ISSN: 1098-0121, DOI: 10.1103/PhysRevB.85.014408 Retrieved from the Internet: URL:https://arxiv.org/pdf/1112.2667> [retrieved on 2025-03-14] * the whole document * | 6 | |

-----

-----

-/--

TECHNICAL FIELDS
SEARCHED      (IPC)

G06N

The present search report has been drawn up for all claims

| Place of search | Date of completion of the search | Examiner |
|---|---|---|
| The Hague | 17 March 2025 | Veynachter, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    .....................................................................................

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | COMPTON R. ET AL: "Dynamic Rabi sidebands in laser-generated microplasmas: Tunability and control", PHYSICAL REVIEW A (ATOMIC, MOLECULAR, AND OPTICAL PHYSICS), [Online] vol. 83, no. 5, 23 May 2011 (2011-05-23), XP093259768, USA ISSN: 1050-2947, DOI: 10.1103/PhysRevA.83.053423 Retrieved from the Internet: URL:https://link.aps.org/accepted/10.1103/PhysRevA.83.053423> [retrieved on 2025-03-14] * the whole document * ----- | 7 | |
| A | Silvério Henrique ET AL: "Pulser: An open-source package for the design of pulse sequences in programmable neutral-atom arrays", Quantum, 12 January 2022 (2022-01-12), page 629, XP055958292, Ithaca DOI: 10.22331/q-2022-01-24-629 Retrieved from the Internet: URL:https://arxiv.org/pdf/2104.15044.pdf [retrieved on 2022-09-06] * the whole document * ----- | 1-11 | TECHNICAL FIELDS SEARCHED (IPC) |

The present search report has been drawn up for all claims

| Place of search | Date of completion of the search | Examiner |
|---|---|---|
| The Hague | 17 March 2025 | Veynachter, Alexis |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LOÏC HENRIET** ; **LUCAS BEGUIN** ; **ADRIEN SIGNOLES** ; **THIERRY LAHAYE** ; **ANTOINE BRO-WAEYS** ; **GEORGES-OLIVIER REYMOND** ; **CHRIS-TOPHE JURCZAK**. Quantum computing with neutral atoms. *Quantum*, September 2020, vol. 4, ISSN 2521-327, 327